# EUROPÄISCHE PATENTSCHRIFT

(11) **EP 3 033 238 B1**
(45) Veröffentlichungstag und Bekanntmachung des Hinweises auf die Patenterteilung: **19.07.2017**
(21) Anmeldenummer: 14765847.0
(22) Anmeldetag: 05.08.2014
(51) Int. Cl.: B60G 17/02

(54) **VORRICHTUNG ZUR HÖHENVERSTELLUNG EINES FAHRZEUGAUFBAUS**
DEVICE FOR ADJUSTING THE HEIGHT OF A VEHICLE BODY
DISPOSITIF PERMETTANT LE RÉGLAGE EN HAUTEUR D'UNE CARROSSERIE DE VÉHICULE

(30) Priorität: 14.08.2013 DE 102013013467; 27.08.2013 DE 102013216969; 08.11.2013 DE 102013222729; 01.04.2014 DE 102014206142
(43) Veröffentlichungstag der Anmeldung: 22.06.2016
(73) Patentinhaber: Schaeffler Technologies AG & Co. KG, 91074 Herzogenaurach (DE)
(72) Erfinder: MERSMANN, Simon, 91074 Herzogenaurach (DE); MARSING, Kilian, 91077 Hetzles (DE); HOLZBERGER, Markus, 91448 Emskirchen (DE); KREHMER, Hartmut, 91052 Erlangen (DE); ROSENFELD, Jochen, 91056 Erlangen (DE); DOBRE, Florin, R-50052 Brasov (RO); HUSU, Adrian, R-500461 Brasov (RO)
(86) Internationale Anmeldenummer: PCT/DE2014/200379
(87) Internationale Veröffentlichungsnummer: WO 2015/021980

(56) Entgegenhaltungen:
- EP-A2- 1 953 013
- WO-A1-2013/031623
- DE-A1-102010 036 238
- US-A1- 2009 108 546
- US-A1- 2010 308 518

## Beschreibung

### Gebiet der Erfindung

Die Ereindung betrifft eine Vorrichtung zur Höhenverstellung eines Fahrzeugaufbaus enthaltend ein zwischen Fahrzeugaufbau und einem Radträger angeordnetes Bewegungsgewinde, das zwel zwischen einer oberen und einer unteren Verstellposition gegeneinander verlagerbare Bauteile verlagert, wobei das Bewegungsgewinde mit zwei gegeneinander relativ verdrehbaren aus einer Spindel und einer Spindelmutter gebildeten Gewindeteilen versehen ist wobei das eine Gewindeteil axial fest und von einem Drehantrieb drehangetrieben an einem Bauteil und das andere Getriebeteil drehfest und axial verlagerbar an dem anderen Bauteil aufgenommen ist

### Hintergrund der Erfindung

Gattungsgemäße Vorrichtungen zur Höhenverstellung von Fahrzeugaufbauten sind insbesondere zur Erhöhung der Bodenfreiheit von Kraftfahrzeugen beziehungsweise deren Absenkung bei ebenen Fahrbahnen beispielsweise zur Verringerung des Luftwiderstands an den Federbeinen, an einem Federbeinlager oder an einem Radträger der Kraftfahrzeuge vorgesehen. Hierbei kann beispielsweise entsprechend der EP 2 332 756 A2 eine Höhenverstellung zwischen einer Aufnahme des Federbeins und einem oberen Federteller einer vorgespannten Feder des Federbeins oder wie aus der EP 1 953 013 A2, die als nächstliegender Stand der Technik betrachtet wird, bekannt zwischen einem einen Radträger aufnehmenden Bauteil wie Hülsenteil und einem unteren Federteller vorgesehen sein Eine Betätigung derartiger Verrichtungen erfolgt beispielsweise mittels eines Elektromotors, der ein Bewegungsgewinde, beispielsweise einen Spindeltrieb oder Kugelspindeltrieb drehantreibt so dass aus der Drehbewegung beispielsweise einer drehfest und axial verlagerbaren Spindel und einer daraus drehangetriebenen, axial festen Spindelmutter eine Axialverlagerung eines festen Bauteils gegenüber einem zu diesem axial verlagerbaren Bauteil des Federbeins erfolgt und damit eine im Wesentlichen stufenlose Höhenverstellung des Federbeins und damit des Fahrzeugaufbaus mit einer entsprechenden Einstellung der Bodenfreiheit zwischen einer oberen und einer unteren Verstellposition erzielt wird. Hierbei wirken von dem an dem Federbein befestigten Rad aufgenommene Stöße auf das Bewegungsgewinde, insbesondere auf die Kugeln und deren Laufbahnen eines Kugelgewindetriebs negativ ein.

### Aufgabe der Erfindung

Aufgabe der Erfindung ist die vorteilhafte Weiterbildung einer Vorrichtung zur Höhenverstellung eines Fahrzeugaufbaus, deren Bewegungsgewinde zumindest teilweise gegen Stöße entlastet ist.

### Allgemeine Beschreibung der Erfindung

Die Aufgabe wird durch den Gegenstand des Anspruchs 1 gelöst Die von diesem abhängigen Ansprüche geben vorteilhafte Ausführungsformen des Gegenstands des Anspruchs 1 wieder.

Die vorgeschlagene Vorrichtung dient dem Anheben und Absenken des Fahrzeugaufbaus beziehungsweise dem Anheben oder Absenken einzelner Achsen oder des Fahrzeugaufbaus, beispielsweise einer Karosserie, eines Fahrgestells mit entsprechenden Aufbauten und dergleichen. Beispielsweise kann eine Treibstoffeinsparung durch Veminderung/Optimierung des Luftwiderstands beziehungsweise der Luftumströmung erzielt werden wenn eine geschwindigkeitsabhangige Niveauregulierung durch Absenken des Fahrzeugaufbaus bel hoher Geschwindigkeit und dessen Anheben bei niedrigen Geschwindigkeiten erfolgt Weiterhin kann eine Beladunskompensation oder Beladungshilfe erfolgen indem ein Anheben des Fahrzeugaufbaus, beispielsweise eines Fahrzeughecks bei hoher Zuladung oder ein Absenken zur komfortableren Beladung des Fahrzeugs erfolgt. Weiterhin kann eine Ein-Ausstiegshilfe durch Anheben oder Absenken des Fahrzeugaufbaus erzielt werden. Die Geländegängigkeit kann durch Anheben des Fahrzeugs zur Erzielung einer größeren Bodenfreiheit erfolgen. Eine verbesserte Straßenlage kann durch Absenken des Fahrzeugaufbaus erzielt werden. In Verbindung mit einem entsprechenden Steuersystems, beispielsweise einer Wank- oder Nicksteuerung des Fahrzeugs können Nick- und Wankbewegungen abgefangen oder aufgebracht werden. Beispielsweise kann eine Beruhigung des Fahrzeugaufbaus nach dem Sky-Hook-Prinzip erreicht werden, indem die an allen Rädem angeordneten Vorrichtungen einzeln von einer bevorzugt zentralen Steuereinrichtung gesteuert werden und so jedes einzelne Rad (pro-)aktiv an bestimmte Fahrbahnanregungen angepasst werden kann.

Es hat sich aus technischen und ökonomischen Gründen als vorteilhaft erwiesen, einen Hub zwischen zwei Verstellpositionen von 20 mm bis 70 mm oder mehr bevorzugt zwischen 20 mm bis 50 mm vorzusehen. Eine Versellgeschwindigkeit zwischen den beiden Verstellpositionen ist zwischen 5 mm/sec bis 100 mm/sec bevorzugt zwischen 5 mm/sec und 20 mm/sec vorteilhaft. Ein bevorzugter Einbauort der Vorrichtung erfolgt an den Federbeinen einer oder aller Achsen eines Fahrzeugs. Das Bewegungsgewinde ist bevorzugt koaxial zu einem Dämpfer des Federbeins vorgesehen. Das Bewegungsgewinde kann dabei die Verstellpositionen und damit den Hub zwischen einem Federteller gegenüber einem festen Bauteil des Federbeins einstellen. Alternativ kann ein Hub oberhalb des oberen Federtellers im Bereich eines Federbeilagers an dem Fahrzeugaufbau, beispielsweise zwischen Dämpferrohr und Anbindung zum Fahrzeugaufbau erfolgen. Alternativ kann das Bewegungsgewinde unterhalb des unteren Federtellers zwischen Federteller und Radträger beispielsweise zwischen Radanbindung und Anbindung der Feder-Dämpfereinheit vorgesehen sein

Das Bewegungsgewinde weist in einer bevorzugten Ausführungsform zwei jeweils einem Bauteil drehfest zugeordnete Gewindeteile auf, die aufeinander verdrehbar angeordnet sind Die Gewindeteile stehen in Wirkeingriff miteinander, das heißt sie stützen die in den unterschiedlichen einzustellenden Verlagerungspositionen der Bauteile gegeneinander die axial auftretenden Kräfte ab Die Ausbildung des Wirkeingriff kann direkt zwischen Gewindeabschnitten der Gewindeteile oder mittels zwischen diesen abwälzenden Wälzkörpem, beispielsweise Kugeln oder Rollen ausgebildet sein Hierbei ist ein Gewindeteil drehfest und axial verlagerbar an einem der Bauteile und das andere Gewindeteil axial fest und verdrehbar an dem anderen Bauteil angeordnet. Das verdrehbare Gewindeteil ist in beiden Drehrichtungen von einem Drehantrieb, beispielsweise einem Elektromotor antreibbar, um das Bewegungsgetriebe zu betätigen. Hierbei sind die Gewindeteile in bevorzugter Weise aus einer Spindel und einer auf dieser verdrehbar aufgenommen Spindelmutter gebildet. Entweder die Spindel oder die Spindelmutter sind hierbei drehangetriben, wobei jeweils das andere Gewindeteil - bei drehangetriebener Spindel die Spindelmutter oder bei drehangetriebener Spindelmutter die Spindel-drehfest und axial verlagerbar ausgebildet ist und die axiale Verlagerung wie Beabstandung zwischen den beiden Bauteilen zwischen einer unteren und einer oberen Verstellposition einstellt.

Zum Schutz des Bewegungsgewindes, insbesondere des axial belasteten Wirkeingriffs zwischen den Gewindeteilen wird der Wirkeingriff zwischen einer oberen und einer unteren Verstellposition zumindest einmal mechanisch überbrückt, Hierzu kann eine schaltbare Verriegelungseinrichtung vorgesehen sein, die an der oberen und/oder unteren Verstellposition und/oder an beliebigen Positionen dazwischen eine schaltbare Überbrückung des Wirkeingriffs bereitsteilt. In erweitertem Sinne ist unter Überbrückung des Bewegungsgewindes die Überbrückung dessen Wirkeingriffs zu verstehen. Zur Bereitstellung der zwischen der oberen und unteren Verstellposition der Bauteile wirksamen Verriegelungseinrichtung sind zumindest ein bevorzugt zwei, drei oder mehr den Wirkeingriff des Bewegungsgewindes mechanisch überbrückende, schaltbare Formchlusse vorgesehen. Im einfachsten Fail ist jeweils ein Formschluss an der oberen Verstellposition bei minimalem Abstand der Bauteile und ein Formschluss an der unteren Verstellposition bei maximalem Abstand der Bauteile, zu einander schaltbar vorgesehen In besonders vorteilhafter Ausführung der Vorrichtung ist zumindest ein zwischen diesen axialen Extrempositionen schaltbarer Freilauf vorgesehen, um beispielsweise bei unterschiedlichen Beladungszuständen und dergleichen jeweils unter Überbrückung des den entsprechenden Abstand zwischen den beiden Bauteilen einstellenden Bewegungsgewindes eine formschlussige Verbindung der beiden Bauteile in ausreichender Höhenanpassung zu erzielen.

Gemäß einer vorteilhaften Ausführungsform ist zumindest ein schaltbarer Formschluss durch eine abhängig von einer axialen Verlagerung der die Bauteile gegeneinander schaltenden Verriegelungseinrichtung nach dem Kugelschreiberprinzip gebildet.

Hierzu enthält die Verriegelungseinrichtung beispielsweise einen verdrehbar und axial fest an der Spindel aufgenommenen Verriegelungsring mit über den Umfang verteilt angeordneten Verriegeluogsnocken. In Zusammenwirkung mit diesen sind an der Spindelmutter beispielsweise aus einem Rampenring gebildete über den Umfang verteilte und ansteigende Schaltrampen und über den Umfang verteilte Längsnuten, in denen die Verriegelungsnocken des Verriegelungsrings geführt sind, axial abgestutzt. Unter axialer Abstützung ist zu verstehen, dass die Längsnuten und die Schaltrampen mittels einer zwischen den Bautellen wirksamen Kraft, beispielsweise der zwischen der Fahrzeugkarosserie und einem Radträger wirksamen Schwerkraft, an der Spindelmutter axial abgestüzt sind Bei einer feststehenden Spindelmutter und einer drehangetriebenen Spindel können dabei Schaltrampen und Längsnuten fest mit der Spindelmutter verbunden sein, während bei einer drehangetriebenen Spindelmutter die Längsnuten und Schaltrampen gegenüber dieser drehentkoppelt, das heißt drehfest gegenüber einem die Spindelmutter verdrehbar aufnehmenden Gehäuse angeordnet sind. In einer bevorzugten Ausführungsform mit einer verdrehbar und axial fest in einem Gehäuse untergebrachten und von einem Drehantrieb angetriebenen Spindelmutter ist unter axialer Abstützung eine feste Anordnung der Längsnuten und Schaltrampen im Gshäuse zu verstehen, wobei bei Drehantrieb der Spindelmutter das gesamte Gehäuse gegenüber der Spindel angehoben und abgesenkt wird. Hierbei ist die Spindel an einem ersten Bauteil befestigt oder bildet dieses und das Gehäuse bildet des zweite Bauteil oder ist an diesem befestigt.

Hierbei werden zwischen der Spindelmutter und der Spindel axiale Formschlüsse mittels Verriegelungtaschen und Längsnutengebildet, indem die Verriegelungsnocken des Verriegelungsrings entlang eines Verlagerungswegs des Bewegungsgewindes verlagerbar in den Läogsnuten aufgenommen sind und bei Anschlag an die Verriegelungstaschen einen Formschluss bilden.

In einer bevorzugten Ausführungsform ist hierzu an der Spindelmutter eine die Längsnuten aufweisende Führungshülse axial abgestützt aufgenommen. Bei drehangetriebener Spindel kann die Führungshülse fest mit der Spindelmutter Verbunden, beispielsweise verschweißt, verstemmt und/oder verrastet sein, während bei einer drehangetriebenen Spindelmutter die Führungshülse bevorzugt drehentkoppelt und an dieser beispielsweise mittels eines Axiallagers axial abgestützt ist. Die Führungshülse weistüber den Umfang werteilt Längsnuten und Verriegelungstaschen auf, die beispielsweise in eine aus Blech hergestellte Führungshülse bevorzugt welkzeugfallend eingebracht wie eingeformt oder aus der Hülse als Längsschlitze ausgenommen sein können. Hierbei sind unter Längsnuten ausdrücklich auch die Längsschlitze zu verstehen.

Die Längsnuten bildenin vorteilhafter Weise Gruppen mit jeweils bevorzugt drei über den Umfang verteilten unterschiedlichen Längen, die durch die Verriegelungstaschen axial begrenzt sind. Bei einer axialen Verlagerung des axial verlagerbaren Gewindeteils sind die Verriegelungsnocken bevorzugterweise in der langsten Längsnut geführt. Eine Ablage der Verrieglungsnocken erfolgt hierbei in der oberen Verstellposition an den Verriegelungstaschen dieser Längsnuten zur Bildung eines ernten axialen Formschlusses. Spuren die Verriegelungsnocken aus den Längsnuten aus, verdreht sich der Verriegelungsring bei einem Anfahren der Verriegelungsnocken an die Schaltrampen, so dass die Verriegelungsnocken auf eine kürzerer Längsnuten ausgerichtet werden. Bei Drehrichtungsumkehr des Drehantriebs spuren die Verriegelungsnocken in die kürzeren Längsnuten ein und schlagen entsprechend bei verkürzten Verlagerungswegen an den zugehörigen Verriegelungstaschen an und bilden mit diesen bei verkürzten Abständen gegenüber der oberen Verstellposition. Je nach Schaltung, das heißt Verdrehung des Verriegelungsrings an den Schaltrampenstellen die Verriegelungsnocken den axialen Formschluss beispielsweise an der unteren Verstellposition, an der oberen oder zumindest einer dazwischen liegenden axialen Verstellposition ein. Je nach Anzahl der Gruppen von Längsnuten unterschiedlicher Länge kann eine entsprechende Anzahl, beispielsweise zwei bis sechs, bevorzugt drei unterschiedlicher axialer Verstellpositionen mit das Bewegungsgewinde überbrückender Formschlüsse vorgesehen sein. In der unteren Verstellposition kann eine Ausbildung von Längsnuten vernachlässigbar kurz sein, so dass diese quasi entfallen

Die Positionierung der Verriegelungsnocken an den Längsnuten einer gewünschten Verriegelungsposition erfolge durch eine entsprechende Anzahl von Schaltvorgängen zwischen den Verriegefungsnocken und den Schaltrampen. Der gesamte schaltvorgang erfolgt dabei in einer ersten Drehrichtung des verdrehbaren Gewindeteils durch Ausspuren der Verriegelungsnocken aus den aktuellen Längsnuten. Anfahren der Verriegelungsnocken an die Schaltrampen. Verdrehen des Verriegelungsrings durch Gleiten der Verriegelungsnocken entlang der Rampensteingungen der Schaltrampen, Einstellen auf die in Umfangsrichtung nächste Vertellposition durch Anschlag an den Umfangsanschlägen der Schaltrampen, Drehrichtungsumkehr des Drehantriebs und Einspuren der Verriegelungsnocken in die in Umfangsrichtung nächste Gruppe von Längsnuten. Um ein Weiterschalten der Verriegelungsnocken gegenüber den Längsnuten zu ermöglichen, sind die Anschläge wie Umfangsanschläge bezüglich einer Mittelachse wie Längsachse der Längsnuten in Umfangsrichtung versetzt und die Eingänge der Längenuten und die Verriegelungsnocken weisen zueinander komplementäre Einfuhrschrägen auf so dass beim Einspuren der Verriegelungsnocken in die Längsnuten mittels dieser Einfuhrschrägen der Verriegelungsring leicht, das heißt, mit einem kleineren Umfang als einer Rampenlänge der Schaltrampen in Umfangsrichtung, verdreht wird. Dadurch treffen die Verriegelungsnocken bei erneutem Ausspuren aus den Längsnuten beim nächsten Schaltvorgang wieder auf Steigungen der Schaltrampen und nicht direkt an Anschläge der Schaltrampen, wie dies bei einer fehlenden Verdrehung der Fall wäre.

Sollen die Verriegelungsnocken in eine andere Gruppe von Längsnuten eingespurt werden, wird der Schaltvorgang entsprechend oft wiederholt Unter Drehrichtungsumkehr des Drehantriebs ist sowohl in bevorzugter Weise die Umpolung eines als Drehantrieb vorgesehenen Elektromotors als auch eine Umschaltung des Drehsinns in einem schaltbaren Getriebe zwischen Drehantrieb und drehangetriebenem Gewindeteil zu verstehen.

Ein zwischen Verriegelungsnocken und Verriegelungstaschen gebildeter Formschluss wird wieder aufgehoben, indem die Drehrichtung des Drehantriebsumgekehrt wird und die Verriegelungsnocken in den entsprechenden Längsnuten verlagert oder zur Einleitung eines weiteren Schaltvorgangs aus diesen ausgespurt werden.

Die Verriegelungseinrichtung kann auf diese Weise zwischen den Verstellpositionen mehrstufig ausgebildete schaltbare Formschlüsse mit jeweils einem über den Umfang stufenförmig wirksam angeordneten Verriegelungsring. Schaltrampen und einer Führungshülse aufweisen. Hierdurch kann das Bewegungsgewinde auch an Verstellpositionen zwischen der oberen und unteren Verstellposition durch Schalten eines Formschlusses entlastet werden.

In einer vorteilhaften Ausführungsform bei drehangetriebener Spindel kann vorgesehen sein, dass die Spindelmutter mittels der Führungshülse drehfest an dem ersten Bauteil aufgenommen ist, wobei nach radial innen erweiterte Nasen in Längsschlitze einer radial innerhalb des Bewegungsewindes angeordneten Hülse des ersten Bauteiols, beispielsweise einem Dämpferrohr eines Federbeins oder einer zusätzlichen Hülse eingreifen. Bei drehangetriebener Spindelmutter kann in bovorzugter Weise ein Gehäuse mit den fest aufgenommenen Drehantrieb, der Führungshülse und den Schaltrampen vorgesehen sein. Die spindelmutter ist beispielsweise mittels eines Axiallagers axial fest und verdrehbar in dem Gehause aufgenommen und wird von dem Drehantrieb angetrieben. Hierbei bildet das Gehäuse das erste Bauteil und kann mit einem Radträger fest verbunden sein, während die Spindel einem Federteller eines Federbeins als zweites Bauteil zugeordnet, beispielsweise an diesem befestige sein kann. Bei einem Drehantrieb der Spindelmutter dreht sich diese um die Spindel, so dass sich abhängig von der Drehrichtung des Drehantriebs eine Axialverlagerung zwischen Radträger und Federteller zur Anhebung oder Absenkung der Fahrzeugkarosserie einstellt.

Der Antrieb wie Drehantrieb des drehangetriebenen Gewindeteils kann beispielsweise mittels eines kontaktkommutierten oder bürstenlosen, elektronisch kommutierten Gleichstromelektromotors erfolgen. Dessen Rotor kann achsparallel zu den Bauteilen angeordnet sein und das drehangetriebene Gewindeteil mittels eines Riemen- oder Zahnradantriebs antreiben.

Das Bewegungsgewinde kann als Trapezgewindetrieb. Planetenwälzgetriebe oder bevorzugt als Kugelgewindetrieb ausgebildet sein. Die Abwälzflächen eines Kugelgewindetriebs können rolliert, gewalzt, geschliffen, gedreht oder in anderer Weise eingebracht sein.

Die Verriegelung durch die vorgeschlagene Vorrichtung kann beispielsweise mittels einer Sensorüberwachung, beispielsweise zur Erfassung von Dreh-Kennwerten, über elektrische Größen des Elektromotors oder dergleichen überwacht und gegebenenfalls geregelt werden oder durch einfaches Anfahren eines Anschlags bei Bildung des Formschlusses erfolgen.

### Kurze Beschreibung der Figuren

Die Erfindung wird anhand der in den Figuren 1 bis 10 dargestellten Ausführungsbeispiele näher erläutert. Dabei zeigen:
- Figur 1: eine Vorrichtung mit mit einem Bewegungsgewinde und einer Verriegelungseinrichtung versehenen Vorrichtung.
- Figur 2: die Vorrichtung der Figur 1 im Teilschnitt.
- Figur 3: eine Zusammenstellung verschiedener Baugruppen der Vorrichtung der Figuren 1 und 2.
- Figur 4: Führungshülse und Verriegelungsring der Vorrichtung der Figuren 1 bis 4 an einer oberen Verstellposition,
- Figur 5: Führungshülse und Verriegelungsring der Vorrichtung der Figuren 1 bis 4 an einer unteren Verstellposition.
- Figur 6: einen Vergleich der Verrichtung in der unteren und oberen Verstellposition in Schnittdarstellung.
- Figur 7: eine Vorrichtung mit an drei unterschiedlichen Verstellpositionen angeordneten Formschlüssen in Ansicht.
- Figur 8: einen Vergleich der axialen Positionen der Verriegelungseinrichtung der Figur 7.
- Figur 9: eine gegenüber den Vorrichtungen der vorhergehenden Figuren mit drehangetriebener Spindelmutter ausgebildete Vorrichtung in geschnittener 3D-Ansicht
und
- Figur 10: die Vorrichtung der Figur 9 in vollständiger 3D-Ansicht mit Sicht auf den Riemenantrieb.

### Ausführliche Beschreibung der Figuren

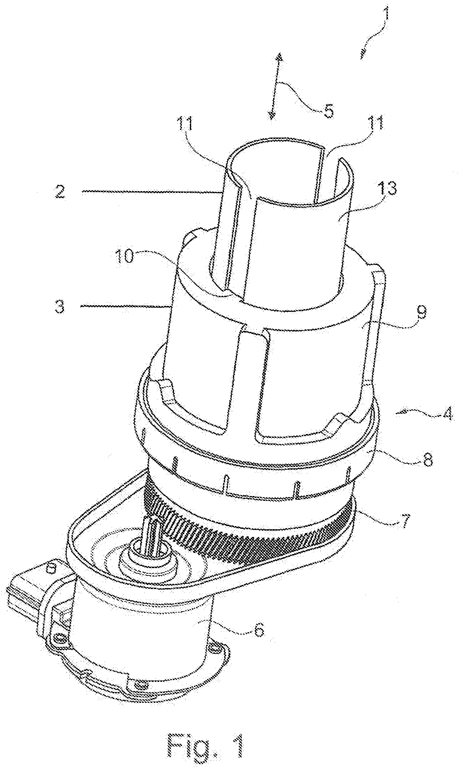

Figur 1 zeigt die Vorrichtung 1 mit dem zwischen einem ersten, hier nur angedeuteten Bauteil 2, beispielsweise einem Dampferrohr eines Federbeins und einem zweiten ebenfalls nur angedeuteten Bauteil 3, beispielsweise einem Federteller eines Federbeins angeordneten Bewegungsgewinde 4 - hier ein Kugelgewindetrieb - in Ansicht. Je nach Ausführungsform ist jeweils ein Bauteil einem Fahrzeugaufbau und das andere Bauteil einem Radträger eines Rads zugeordnet. Das Bewegungsgewinde 4 verlagert die beiden Bauteile 2, 3 gegeneinander in Längsrichtung des Doppelpfeils 5. Hierzu treibt der Elektromotor 6 zur Einstellung der Verlagerungsrichtung in eine jeweils vorgesehene Drehrichtung mittels eines nicht dargestellten Riemens oder einer Zahnradverbindung die axial fest und verdrehbar an dem ersten Bauteil 2 aufgenommene Spindel 7 an. Auf der Spindel 7 ist die Spindelmutter 8 mit der auf dieser fest aufgenommenen Führungshülse 9 drehfest und axial verlagerbar aufgenommen. Hierzu greifen die Nasen 10 der Führungshülse 9 in die Längsschlitze 11 der die Spindel 7 verdrehbar aufnehmenden Hülse 13 ein.

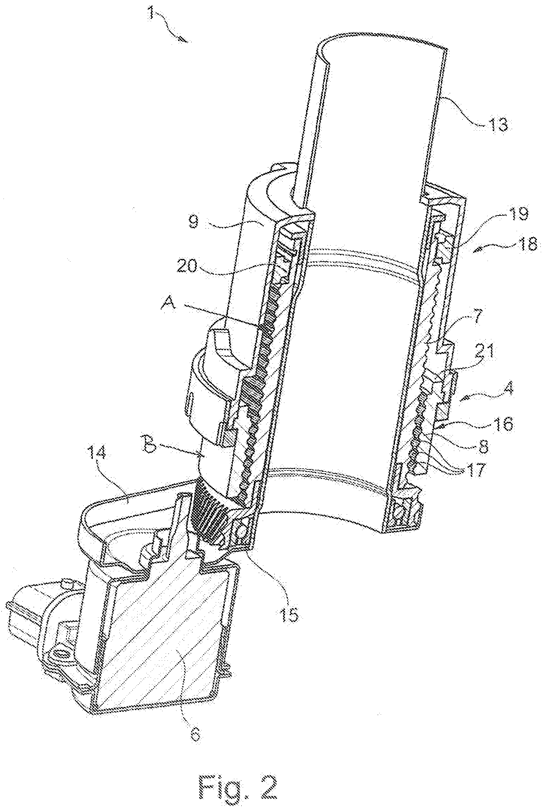

Figur 2 zeigt die Vorrichtung 1 der Figur 1 geschnittener 3D-Ansicht. Die Hülse 13 ist mit dem Motorträger 14 des Elektromotors 6 verbunden. An der Hülse 13 ist mittels des Wälzlagers 15 die Spindel 7 axial fest und verdrehbar aufgenommen. Bei Antrieb der Spindel 7 durch den Elektromotor 6 verdreht sich diese und die Spindelmutter 8 verlagert sich abhängig von der Drehrichtung des Elekromotors 6 axial.

In dem gezeigten Ausführungsbeispiel ist das Bewegungsgewinde 4 als Kugelgewindetrieb 16 enthaltend das Gewindeteil A in Form der Spindel 7, das Gewindeteil B in Form der Spindelmutter 8 und die zwischen diesen abwälzenden Kugeln 17, gebildet. Zwischen den Gewindeteilen A, B übernehmen die Kugeln 17 den Wirkeingriff. Um diesen Wirkeingriff des Bewegungsgewindes 4 zumindest in der oberen Verstellposition bei maximalem Hub und in der unteren - hier dargestellten - Verstellposition ohne Hub vor Belastungen zu schützen, ist die Verriegelungseinrichtung 18 vorgesehen. Die Verriegelungseinrichtung 18 ist aus dem verdrehbar und axial fest an der Spindel 7 aufgenommenen Verriegelungsring 19 mit über den Umfang verteilten, nach radial außen erweiterten Verriegelungsnocken 20, der Führungshülse 9 und dem stirnseitig an der Spindelmutter 8 angeordneten Rampenring 21 gebildet.

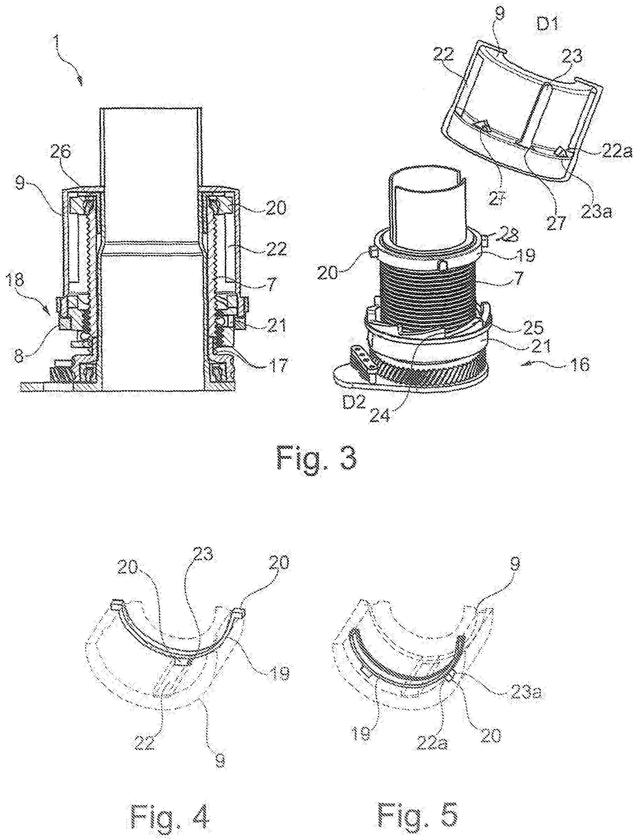

Die Figur 3 zeigt zur Erläuterung der Funktionsweise der Verriegelungseinrichtung 18 die Vorrichtung 1 im Schnitt mit der im Detail D1 dargestellten Führungshülse 9 und dem im Detail D2 dargestellten Kugelgewindetrieb 16. Die Führungshülse 9 weist in dem Ausführungsbeispiel eingeformte oder eingefräste, über den Umfang verteilte lange Längsnuten 22 auf, die an ihren Enden die Verriegelungstaschen 23 aufweisen. Über den Umfang abwechselnd mit den Längsnuten 22 sind die kurzen Längsnuten 22a mit den Verriegelungstaschen 23a vorgesehen.

Die in dem Rampenring 21 aufgenommen Schaltrampen 25 steuern im Zusammenspiel mit den Verriegelungsnocken 20, welche Umfangsposition von den Verriegelungsnocken 20 gegenuber der Führungshülse 9 eingenommen wird. Die auf der Spindel 7 aufgenommene Spindelmutter 8 weist stimseitig dem Verriegelungsring 19 zugewandt den Rampenring 21 mit den Umfang ansteigend angeordneten Schaltrampen 25 auf. Der endseitig an der Spindel 7 mittels des Wälzlagers 26 axial fest und verdrehbar aufgenommene Verriegelungsring 19 weist die radial nach außen erweiterten Verriegelungsnocken 20 auf, die bezüglich ihres Abstands in Umfangsrichtung mit den Längsnuten 22 oder den Längsnuten 22a fluchten. Daraus ergibt sich entsprechend eines Kugelschreiberprinzips folgende Funktion der Verriegelungseinrichtung 18.

Zu Beginn befinden sich an der unteren Verstellposition - wie in Figur 4 gezeigt - die Verriegefongsnocken 20 in den Längsnuten 22 der Führungshülse 9 an den Verriegelungstaschen 23. Hierduch bildet sich entsprachend Figur 3 ein erster Formschluss in axiale Richtung, so dass in der unteren Verstellposition die Spindel 7 gegenüberder Spindelmutter 8 mechanisch unter Umgehung der-Walzlagerung dieser uber die Kugeln 17 abgestützt ist Wird die Spindel 7 durch den Elektromotor 6 (Figur 1) verdreht verlagert sich die Spindelmutter 8 axial, bis die Verriegelungsnocken 20 aus den Längsnuten 22 austreten und an den Schaltrampen 25 des Rampenrings anschlagen, Hierbei wird der Verriegelungsring 19 aufgrund der Teilung der Schaltrampen 25 so verdreht, dass die Verriegelungsnocken 20 am Anschlag 24 (Figur 3) an jeweils einem Anschlag 24 einer Schaltrampe 25 anschlagen und damit an den gegenüberliegendenLängsnuten 22a mit den Verriegelungstachen 23apositioniert werden. Aufgrund des Versatzes der Anschläge 24 gegenüber den Längsnuten 22, 22a wird der Verriegelungsring 19 beim Einspuren der Vorriegelungsnocken 20 in die Längsnuten 22, 22a mittels der Einfuhrschrägen 27, 28 an den Längsnuten 22, 22a, und an den Verriegelungsnocken 20 emeut verdreht, so dass bei einer Rückkehr der Verriegelungsnocken 20 auf die Schaltrampen 25 eine emeute Verdrehung entlang der Schaltrampen 25 an die Anschläge 24 und damit ein emeuter Schaltvorgang erst ermöglich wird.

Nach einer Verlagerung der Spindelmutter 8 durch Drehrichtungsumkehr des Rotors des Elektromotors 6 (Figur 1) tritt - wie in der Figur 5 gezeigt - an der eingestellten oberen Verstellposition ein mechanischer, axialer Formschluss unter Umgehung der Wälzlagerung des Kugelgewindethiebs 16 zwischen den Verriegelungstaschen 23a der Führungshülse und damit der Spindelmutter 8 und den Verriegelungsnocken 20 und damit über den Verriegelungsring 19 mit der Spindel 7 ein. Bei einer Rückbewegung der Spindetmutter 8 treten die Verriegelungsnocken 20 wieder aus den Längsnuten 22a aus. Ein emeuter Anschlag an den Schaltrampen 25 des Rampenrings 21 verdreht den Verriegelungsring 19 wieder so, dass die Verriegelungsnocken 20 wieder mit den Längsnuten 22 fluchten, so dass die Spindelmutter 8 nach Drehrichtungsumkehr des Elektromotors wieder in Richtung unterer Verstellposition verfahren werden kann.

Die Steuerung des Elektromotors 6 (Figur 1) erfolgt mittels entsprechender Sensorik von Drehkennwerten wie beispielsweise Drehzahlen, Drehwinkel und dergleichen des Rotors des Elektromotors, der Spindel und dergleichen und/oder durch Auswertung der elektrischen Betriebsgrößen des Elektromotors, beispielsweise der Betriebsspannung, des Betriebsstroms, der benötigten elektrischen Leistung und dergleichen.

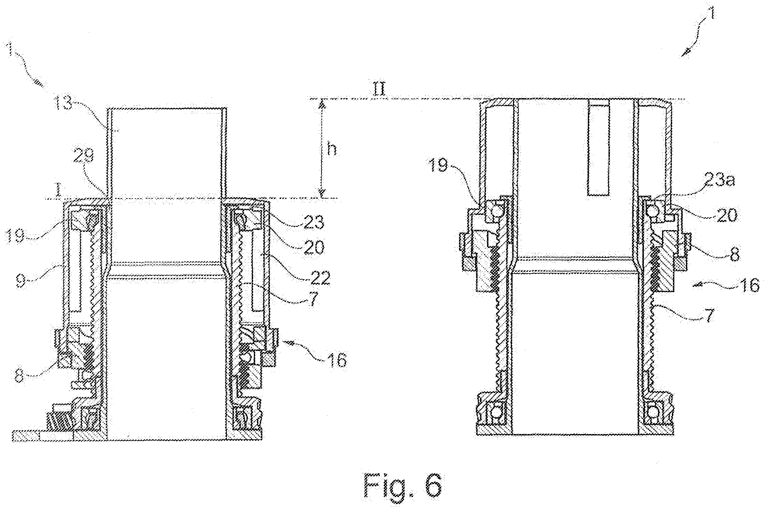

Die Figur 6 zeigt die Vorrichtung 1 mit der zwischen Hülse 13 und Spindel 7 angeordneten Hülse 29, der Führungshülse 9, dem als Außenring eines Axiallagers gebildeten Verriegelungsring 19 mit den Verriegelungsnocken 20 und den Verriegelungsnocken 23 der Längsnuten 22 in der unteren Verstellposition I (links) und in der oberen Verstellposition II (rechts), die den Hub h der Vorrichtung 1 festlegen. In der unteren Verstellposition I ist der Formschluss zur Umgehung des Kugelgewindetriebs 16 zwischen den Verriegelungstaschen 23 und den Verriegelungsnocken 20 und damit zwischen Spindel 7 und Spindelmutter 8 vorgesehen. In den oberen Verstellposition II ist der Formschluss zur Umgehung des Kugelgewindetriebs 16 zwischen den Vorriegelungstaschen 23a und den Verriegelungsnocken 20 des Verriegelungsrings 19, und damit ebenfalls zwischen Spindelmutter 8 und Spindel 7 vorgesehen.

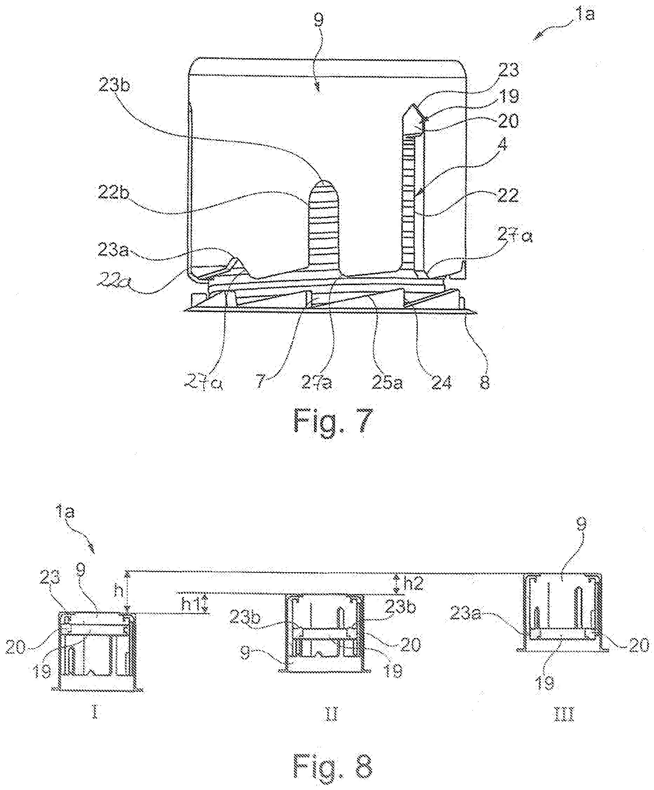

Die Figur 7 zeigt eine gegenüber der Vorrichtung 1 der vorhergehenden Figuren geänderte Vorrichtung 1a, die im Unterschied zu dieser drei mittels axial schaltbarer Formschlüsse das Bewegungsgewinde 4 überbrückende Verstellpositionen aufweist. Entsprechend der Vorrichtung 1 sind in der Führungshülse 9 hier als Längsschlitze dargestellte Längsnuten 22, 22a mit den Verriegelungstaschen 23, 23a vorgesehen, die je nach Umfangsposition die Verriegelungsnocken 20 des Verriegelungsrings 19 aufnehmen und mit diesen an der oberen oder an der unteren Verstellposition einen axielen formschluss bilden. In der Vorrichtung 1a sind im Unterschied zur Vorrichtung 1 weitere Längsnuten 22b mit einer Länge zwischen den Längen der Längsnuten 22, 22a und endseitig angeordneten Verriegelungstaschen 23b Vorgesehen. Die Längsnuten 22, 22a, 22b sind hierbei gleichmäßig abwechselnd über den Umfang angeordnet und die Teilung der Schaltrampen 25a entspricht der Anzahl der Längsnuten 22, 22a, 22b.

Die Auswahl wie Schaltung der Längsnuten 22, 22a, 22b und damit die Auswahl einer axialen Anschlagsposition der Spindelmutter 8 mit der Führungshülse 9 gegenüber der Spindel 7 erfolgt entsprechend durch Anfahren der Verriegelungsnocken 20 gegen die Schaltrampen 25a. Hierbei werden zunächst durch Verdrehung des Verriegelungsrings 19 die Verriegelungsnocken 20 gegen die Anschläge 24 verdreht und damit auf die nächsten Längsnuten - hier von den Längsnuten 22 auf die Längsnuten 22b - ausgerichtet. Soll der axiale Formschluss mit den Verriegelungstaschen 23b der Längenuten 22b bei annähernd halbem Hub zwischen der oberen Verstellposition an den Verriegelungstaschen 23a und der unteren Verstellposition an den Verriegelungstaschen 23 eingestellt werden, werden mittels Drehrichtungsumkehr der Spindel 7 die Verriegelungsnocken 20 gegen die Verriegelungstaschen 23b gefahren. Sollen hingegen die in Umfangsrichtung übernächsten Längsnuten 22a angewählt und an der oberen Verstellposition ein Formschluss hergestellt werden, wird der Schaltvorgang noch einmal wiederholt. Die Ausrichtung der Verriegelungsnocken 20 auf die jeweils in Umfangsrichtung folgenden Shaltrampen 25a erfolgt mittels der Einfuhrschrägen 27a entsprechend den unter Figur 3 beschriebenen, mit den Einfuhrschrägen 28 der Verriegelungsnocken 20 zusammenwirkenden Einfuhrschrägen 27. Es versteht sich, dass zur Ausbildung des Formschlusses an der oberen Verstellposition mittels der Verriegelungstaschen 23a die Längsnut 22a sehr kurz ausgebildet ist oder ganz wegfallen kann.

Die Figur 8 zeigt die Vorrichtung 1a der Figur 7 in den drei Verstellpositionen I, II, III. In der untren Verstellposition I ist die Verstellung zwischen Führungshülse 9 und Spindel minimal, die Verriegelungsnocken 20 des Verriegelungsrings 19 bilden mit den Verriegelungstaschen 23 einen ersten axialen Formschluss. In der Verstellposition III bilden die Verriegelungsnocken 20 des Verriegelungsrings 19 beim. Teilhub h1 der Spindel gegenüber der Führungshülse 9 einen zweiten axialen Formschluss mit den Verriegelungstaschen 23b.

Bei weiterer Verlagerung der Führungshülse 9 gegenüber der Spindel um den bevorzugt dem Teilhub h1 entsprechenden Teilhub h2 ist die um den Hub h gegenüber der unteren Verstellposition I verlagerte Verstellposition II erreicht, bei der die Verriegelungstaschen 23a mit den Verriegelungsnocken 20 des Verriegelungsrings 19 einen dritten axialen Formschluss bilden.

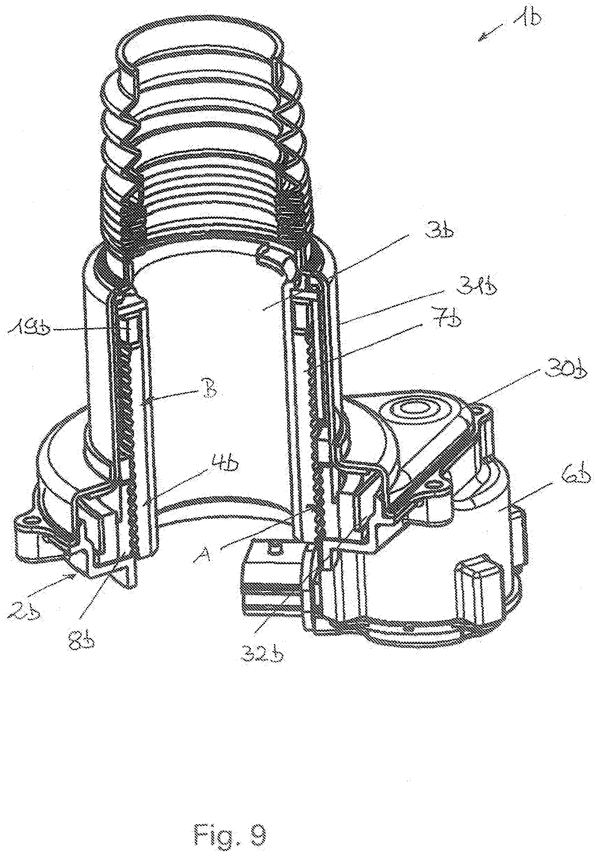

Die Figur 9 zeigt die Vorrichtung 1b mit dem zwischen den Bauteilen 2b, 3b wirksam angeordneten Bewegunsgewinde 4b. Das Bewegungsgewinde 4b ist aus den Gewindeteilen A, B gebildet, welche in diesem Ausführungsbeispiel gegenüber dem Bewegungsgewinde 4 der Figuren 1 bis 8 in Form der drehangetriebenen, axial fest aufgenommenen Spindelmutter 8b und der axial verlagerbaren und drehfest angeordneten Spindel 7b ausgebildet sind. Hierbei verlagert bei Drehantrieb der Spindelmutter 8b mittels des Drehantriebs 6b, beispiefsweise eines Elektromotors die Spinel 7b die beiden Bauteile 2b, 3b gegeneinander.

Die in der oberen Verstellposition bei minimaler Verlagerung der Bauteile 2b, 3b dargestellte Vorrichtung 1b weist das dem Bauteil 2b zugeordnete Gehäuse 30b mit der Hülse 31b auf. Das Gehäuse 30b und damit das Bauteil 2b ist beispielsweise mit einem Radträger oder dergleichen verbunden, während die Spindel 7b an dem beispielsweise mit einem Federteller eines Federbeins verbundenen Bauteil fest aufgenommen ist. Die Spindelmutter 8b ist in dem Gehäuse 30b axial fest und mittels eines nicht einsehbaren Wälzlagers verdrehbar gelagert. Die Spindelmutter 8b wird mittels des zwischen dem Drehantrieb 6b und der Spindelmutter 8b angeordneten Riemens 32b angetrieben. Auf diese Weise ändert sich abhängig von der Drehrichtung des Drehantriebs 6b der axiale Vorschub der Spindel 7b, so dass eine Verlagerung der Spindel 7b zwischen den beiden Verstellpositionen stufenlos erfolgen kann.

Zwischen dem Gehäuse 30b und dem Bauteil 3b stellt sich bei aktiviertem Drehantrieb 6b abhängig von dessen Drehrichtung mittels des Bewegungsgewindes 4b ein vorgegebener Abstand ein, das heißt, der Abstand zwischen Radträger und Federbein und damit der Abstand des Fahrzeugaufbaus zur Fahrbahn vergrößert oder verringert.

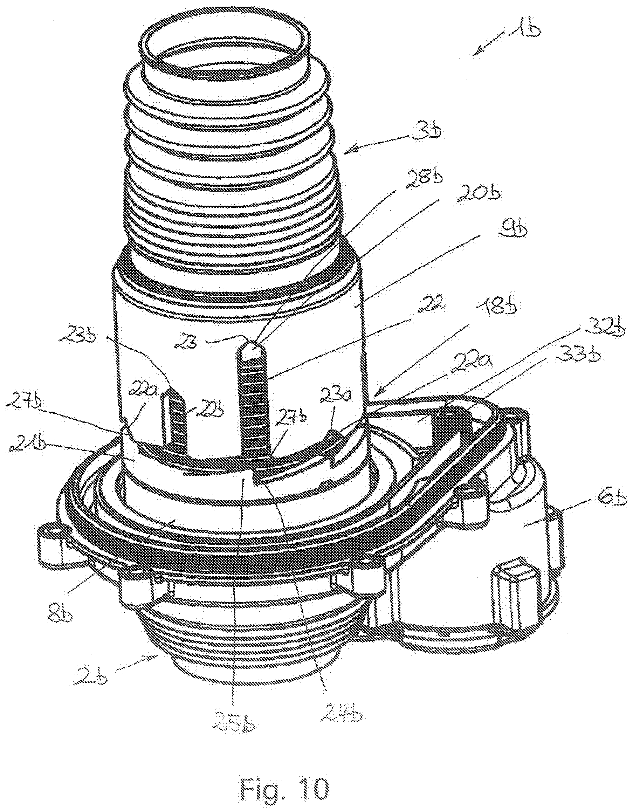

Die Figur 10 zeigt die Vorrichtung 1b der Figur 9 bei abgenommener Hülse 31b (Figur 9) mit Sicht auf den zwischen Spindelmutter 8b und dem Rotor 33b angeordneten Riemen 32b. Desweiteren wird die Sicht auf die hier mehrstufige Verriegelungseinrichtung 18b freigegeben, die aus der fest mit dem Gehäuse 30b verbundenen und gegenüber der Spindelmutter 8b verdrehbar und axial abgestüzt verbundenen Führungshülse 9b und dem zur Führungshülse 9b axial beabstandeten Rampenring 21b und dem verdrehbar und axial fest auf der Spindel 7b aufgenommenen Verriegelungsring 19b (Figur 9) mit den über den Umfang verteilt angeordneten Verriegelungsnocken 20b gebildet ist. Die axiale Abatützung der Führungshülse 9b und des Rampenrings 19b gegenüber der Spindelhülse 9b erforlgt mittels des Gehäuses 30b mit der Hülse 31b (Figur 9). Die Verriegelungsnocken 20b, beispielsweise drei über den Umfang verteilte Verriegelungsnocken 20b verlagem sich entlang der Längsnuten 22, 22a, 22b je nach Ausrichtung des Verriegelungsrings 19b gegenüber der Führungsbülse 9b, bis an den Anschlag an den Verriegelungstaschen 23, 23a, 23b. Hierbei ist die Längsnut 22a vernachlässigbar kurz ausgebildet, um an der unteren Verstellposition bei maximal beabstandeten Bauteilen 2b, 3b einen axialen Formschluss zwischen den beiden Bauteilen 2b, 3b zu erzielen und damit den Wirkeingriff des Bewegungsgewindes 4b (Figur 9) zu überbrücken. In der dargestellten Schaltposition befinden sich die Verriegelungsnocken 20b in den Längsnuten 22 am Anschlag mit den Verriegelungstaschen 23 und bilden damit einen das Bewegungsgewinde 4b an der oberen Verstellposition bei minimaler Verlagerung der Bauteile 2b, 3b überbrückenden Formschluss. Während einer Verlagerung der beiden Bauteile 2b, 3b befinden sich die Verriegelungsnocken 20b bevorzugt in den Längsnuten 22, um den gesamten Verlagerungsweg zwischen den Bauteilen 2b, 3b ausnutzen zu können. Ist dies nicht notwendig können die verriegelungsnocken 20b auch in den Langsnuten 22b gefuht sein.

Der Weehsel zwischen den Längsnuten 22, 22a, 22b mit den Verriegelungstaschen 23, 23a, 23b und damit eine Auswahl der axialen Lage eines einzusteltenden axialen Formschlusses erfolgt durch Verdrehen des Verriegelungsrings 19b (Figur 9) an dem Rampenring, 21b. Hierzu werden durch Verdrehen der Spindelmutter 8b die Verriegelungsnocken 20b gegen die Schaltrampen25b des Rampenrings 21b gefahren. Die zueinander komplementären Profile von Schaltrampen 25b und Verriegelungsnocken 20b bewirken eine Verdrehung des Rampenrings 19b, bis die Verriegelunsnocken 20b an den Anschlägen 24b zwischen den Schaltrampen 25b anschlagen. Die Anschlage 24b sind über den Umfang so positioniert, dass bei einer Drehrichtungsumkehr des Drehantriebs 6bdie Verriegelungsnocken 20b auf die in Umfangsrichtung nächsten Längsnuten 22, 22a, 22b ausgerichtet sind. Herbei sorgen die Einfuhrschragen 27b, 28b an den Verriegelungsnocken 20b und an den Längsnuten 22, 22a, 22b beim Einspuren in die nächsten Längsnuten 22, 22a, 22b mittels einer Teilverdrehung des Verriegelungsrings 19b dafür, dass bei einer Rückverlagerung des Verriegelungsrings 19b die Verriegelungsnocken 20b auf der nächsten Schaltrampe 25b auftreffen und eine emeute Verdrehung des Verriegelungsrings 19b mit einer Ausrichtung der Verriegelungsnocken 20b des Verriegelungsrings 19b mit einer Ausrichtung der Verriegelungsnocken 20b auf die nächsten Längsnuten 22, 22a, 22b und damit Verriegelungstaschen 23, 23a, 23b erfolgen kann.

Durch jede Verlagerung des Verriegelungsrings 19b werden jeweils die in Umfangsrichtung nächsten Längsnuten 22, 22a, 22b angesteuert Dies hat in der gezeigten Anordnung der Länge der Längsnuten 22, 22b, 22a lang, mittel, kurz in Umfangsrichtung zur Folge, dass mittels einer einzigen Schaltung des Verriegelungsrings 19b von kurze auf lange, von langen auf mittlere und von mittleren auf kurze Längsnuten 22, 22a, 22b geschaltet werden kann. Soll von langen auf kurze, von mittleren auf lange oder von kurzen auf mittlere Längsnuten 22, 22a, 22b geschaltet werden, sind Jewells zwei aufeinander folgende Schaltungen notwendig.

Es versteht sich, dass die Anordnung der Längsnuten 22, 22a, 22b auch über den Umfang lang, kurz mittel oder kurz, mittel lang vorteilhaft sein kann. Deswelteren kann die Länge der Längsnuten 22, 22a, 22b so vorgesehen sein, dass sich drei in gleichen oder unterschiedlichen Abständen voneinander eingenchteteaxiale Formschlüsse ergeben.

### Bezugszeichenliste

- 1: Vorrichtung
- 1a: Vorrichtung
- 1b: Vorrichtung
- 2: Bauteil
- 2b: Bauteil
- 3: Bauteil
- 3b: Bauteil
- 4: Bewesgungsgewinde
- 4b: Bewesgungsgewinde
- 5: Doppelpfeil
- 6: Drehantrieb
- 6b: Drehentrieb
- 7: Spindel
- 7b: Spindel
- 8: Spindelmutter
- 8b: spindelmutter
- 9: Führungshülse
- 9b: Führungshülse
- 10: Nase
- 11: Längsschlitz
- 13: Hülse
- 14: Motorträger
- 15: Wälzlager
- 16: Kugelgewindetrieb
- 17: Kugel
- 18: Verriegelungseinrichtung
- 18b: Verriegelungseinrichtung
- 19: Verriegelungsring
- 19b: Verriegelungsring
- 20: Verriegelungsnocken
- 20b: Verriegelungsnocken
- 21: Rampenring
- 21b: Rampenring
- 22: Längsnut
- 22a: Längsnut
- 22b: Längsrnut
- 23: Verriegelungstasche
- 23a: Verriegelungstasche
- 23b: Verriegelungstasche
- 24: Anschlag
- 24b: Anschlag
- 25: Schaltrampe
- 25a: Schaltrampe
- 25b: Schaltrampe
- 26: Wälzlager
- 27: Einfuhrschräge
- 27a: Einfuhrschräge
- 27b: Einfuhrschräge
- 28: Einfuhrschräge
- 28b: Einfuhrschräge
- 29: Hülse
- 30b: Gehäuse
- 31b: Hülse
- 32b: Riemen
- 33b: Rotor
- I: untere Verstellposition
- II: obere Verstellposition
- III: mittlere Verstellposition
- A: Gewindeteil
- B: Gewindeteil
- D1: Detail
- D2: Detail
- h: Hub
- h1: Tellhub
- h2: Tellhub

## Patentansprüche

1. Vorrichtunq (1, 1a, 1b) zur Höhenvserstellung eines Fahrzeugaufbaus enthaltend ein zwischen Fahrzeugaufbau und einem Radtrager angeordnetes Bewegungsgewinde (4, 4b), das zwei zwischen einer oberen und einer unteren Verstellpositlon (I, II) gegeneinander verlagerbare Bauteile (2, 2b, 3, 3b) verlagert, wobei des Bewegungsgewinde (4, 4b) mit zwei gegeneinander relativ verdrehbaren, aus einer Spindel (7, 7b) und einer Spindelmutter (8, 8b) gebildeten und in Wirkeingriff zueinander stehenden Gewindeteilen(A, B) versehen ist, wobei das eine Gewindeteil (A) axiale fest und von einem Drehantrieb (6, 6b) drehangetrieben an einen Bauteil (2, 2b) und das andere Gewindeteil (B) drehfest und axial verlagerbar an dem anderen Bauteil (3, 3b) aufgenommen ist, **dadurch gekennzeichnet, dass** eine den Wirkeingriff zwischen den Gewindeteilen (A, B) des Bewegungsgewindes(4, 4b) überbrückende, schaltbare Verriegelungseinrichtung (18, 18b) vorgesehen ist.

2. Vorrichtung nach Anspruch 1, **dadurch gekennzeichnet, dass** die Verriegelungseinrichtung (18, 18b) zumindest zwei axial beabstandete, zwischen den Bauteilen (2, 2b, 3, 3b) das Bewegungsgewinde (4, 4b) mechanisch überbrückende, schaltbare Formschlüsse aufweist.

3. Vorrichtung (1, 1a, 1b) nach Anspruch 2, **dadurch gekennzeichnet, dass** die Verrigelungseinrichtung (18, 18b) an der Spindelmutter (8, dass die Verrlegelungseinrichtung (18, 18b) an der Spindelmutter (8, 8b) axial abgestützte, über den Umfang abwechselnde Längsnuten (22, 22a, 22b) mit auf unterschiedlicher axialer Höhe angeordneten Verriegelungstaschen (23, 23a, 23b) aufweist, wobei in den Längsnuten (22, 22a, 22b) Verriegelungsnocken (20, 20b) eines über den Umfang verdrehbar und axial fest an der Spindel (7, Tb) aufgenommenen Verriegelungsrings (19, 19b) verlagerbar aufgenommen sind und axial besbstandet zu den Lüngsnuten (22, 22a, 22b) mit Spindelmutter (8, 8b)axial ablestützte, über den Umfang in der Anzahl der Längsnuten (22, 22a 22b) verteilt angeordnete und ansteigende Schaltrampen(25, 25a, 25b) vorgesehen sind, wobei bei aus den Längsnuten (22, 22a, 22b) ausgespurten Verriegelungsnocken (20, 20b) der Verriegelungsring (19, 19b) mittels eines Schaltvorgangs der Verriegelungsnocken (20, 20b) an den Schaltrampen (25, 25a, 25b) bei axialer Anlage der Verriegelungsnocken (20)an den Schaltrampen(25, 25a, 25b) verdreht wird, bis die Verriegelungsnocken (20, 20b) an Anschlagen (24, 24b) der Schaltrampen (25, 25a, 25b) anschlagen und die Verriegelungsnocken (20, 20b)bei einer Drehrichtungsumkehr des Drehantriebs (6, 6b)in Längsnuten (22, 22a, 22b) einspuren und mit den in den Längsnuten (22, 22a, 22b) mit vorgegebener axialer Hohe angeordneten Verriegelungstaschen (23, 23a, 23b) einen der axialen Formschlüsse bilden.

4. Vorrichtung (1, 1a, 1b) nach Anspruch 3, **dadurch gekennzeichnet, dass** zumindest zwei über den Umfang verteilt angeordnete Längsnuten (22, 22a, 22b) mit auf desselben axialen Höhe angeordneten Verriegelungstaschen (23, 23a, 23b) vorgesehen sind.

5. Vorrichtung (1, 1a, 1b) nach Anspruch 3 oder 4, **dadurch gekennzeichnet, dass** die Anschläge (24, 24b) gegenuber einer Mitlelacse der Längsnuten (22, 22a, 22b) in Umfangsrichtung versetzt sind und Längsnuten (22, 22a, 22b) in Umfangsrichtung versetzt sind und Längsnuten (22, 22a, 22b) und Verriegelungsnocken (20, 20b) zueinander komplementäre, eine Verdrehung des Verriegelungsrings (19, 19b) bewirkende Einfuhrschragen (27, 27a, 27b, 28, 28b) aufweisen,

6. Vorrichtung (1, 1a, 1b)nach einem der Ansprüche 3 bis 5, **dadurch gekennzeichnet, dass** die Verriegelungseinrichtung (1B, 8h)über den Umfang verteilt mehrere Verriegelungstaschen(23, 23a, 23h) mit axial mehrstufig ausgebildeten sachaltbaren Formschlüssen aufweist

7. \/orrichtung (1, 1a, 1b) nach einem der Ansprüche 3 bis 6, **dadurch gekennzeichnet, dass** mit der Spindelmutter (8, Bb) eine Führungshülse (9, 9b) mit eingeformten oder aufgenommenen Längsnuten (22, 22a, 22b) mit auf unterschledlicher axialer Höhe von den Verriegelungstaschen (23, 23a, 23b) begrenzten Längsnuten (22, 22a, 22b) axial abgestützt verbunden ist,

8. Vorrichtung (1, 1a, 1b) nach einem der Ansprüche 3 bis 7, dass ein axialer Formschluss an Verriegelungstaschen (23a) ohne Längsnuten vorgesehen ist.

9. Vorrichtung (1, 1a, 1b) nach einem der Ansprüche 1 bis 8, **dadurch gekennzeichnet dass** der Drehantrieb (6, 6b) achsparallel zu den Bauteilen (2, 2a, 3, 3b) mittels eines Gehause (30b) an einem Bauteil (2, 2b) fest angeordnet ist und mittels eines Riemen-oder Zahnradantriebs das Gewindeteil (A) drehantreibt.

10. Vorrichtung (1b) nach einem der Ansprüche 1 bis 9, **dadurch gekennzeichnet dass** die Spindelmutter (8b) drehangetrieben ist.

11. Vorrichtung (1b) nach einem der Ansprüche 8 bis 10, **dadurch gekennzeichnet, dass** die Führengshülse (9, 9b) und die Schaltrampen (25, 25a, 25b) axial fest und verdrehbar gegenüber der Spindeimutter (8b) gelagert sind.

12. Vorrichtung: (1, 1a) nach einem der Ansprüche 1 bis 9, **dadurch gekennzeichnet, dass** die Spindel (7) drehangetrieben ist.

13. Vorrichtung (1, 1a, 1b) nach einem der Ansprüche 1 bis 12, **dadurch gekennzeichnet, dass** das Bewegungsgewinde (4, 4b) als Trapezgewindetrieb, Kugelgewindetrieb (16) oder Planetenwälzgetriebe ausgebildet ist.

14. Vorrichtung (1, 1a, 1b) nach einem der Ansprüche 1 bis 13, **dadurch gekennzeichnet, dass** die beiden Bauteile (2, 2a, 3, 3b) in einem Federbein vorgesehen sind.

15. Vorrichtung (1, 1a, 1b) nach einem der Ansprüche 1 bis 14, **dadurch gekennzeichnet, dass** die Vorrichtung von einer zentralen Steuereinheit zur Ausbildung einer Niveauregelung steuerbar ist,

16. Vorrichtung nach wenigstens einem der Ansprüche 1 bis 15, deren Verriegelungseinrichtung (18, 18b) einen Verriegelungsring (19, 19b) aufweist, der drehbar und axial unverschieblich an der Spindel (7, 7b) gelagert ist, wobei in wenigstens einer der Versteilpositionen (I, II) zwischen den zwei Bauteilen (2, 2b, 3, 3b) wirkende Kräfte über die Spindel (7, 7b) und über den Verriegelungsring (19, 19h) übertragen werden.

## Claims

1. Apparatus (1, 1a, 1b) for adjusting the height of a vehicle body comprising a transmission thread (4, 4b) which is arranged between the vehicle body and a wheel support and moves two components (2, 2b, 3, 3b) which can be moved with respect to one another between an upper and a lower adjusting position (I, II), the transmission thread (4, 4b) being provided with two thread parts (A, B) which can be rotated relative to one another, are formed from a spindle (7, 7b) and a spindle nut (8, 8b), and are in operative engagement with one another, the one thread part (A) being received on one component (2, 2b) such it is fixed axially and is driven rotationally by a rotary drive (6, 6b), and the other thread part (B) being received on the other component (3, 3b) such that it can be moved axially and is fixed on the said other component (3, 3b) so as to rotate with it, **characterized in that** a switchable locking device (18, 18b) is provided which bridges the operative engagement between the thread parts (A, B) of the transmission thread (4, 4b).

2. Apparatus according to Claim 1, **characterized in that** the locking device (18, 18b) has at least two switchable positively locking connections which are spaced apart axially and mechanically bridge the transmission thread (4, 4b) between the components (2, 2b, 3, 3b).

3. Apparatus (1, 1a, 1b) according to Claim 2, **characterized in that** the locking device (18, 18b) has longitudinal grooves (22, 22a, 22b) which are supported axially on the spindle nut (8, 8b), alternate over the circumference, and have locking pockets (23, 23a, 23b) which are arranged at different axial heights, locking cams (20, 20b) of a locking ring (19, 19b) which can be rotated over the circumference and is received axially fixedly on the spindle (7, 7b) being received movably in the longitudinal grooves (22, 22a, 22b), and having rising switching ramps (25, 25a, 25b) which are supported axially with respect to the spindle nut (8, 8b) and are arranged distributed over the circumference in the number of the longitudinal grooves (22, 22a, 22b) being provided such that they are spaced apart axially from the longitudinal grooves (22, 22a, 22b), the locking ring (19, 19b) being rotated by means of a switching operation of the locking cams (20, 20b) on the switching ramps (25, 25a, 25b) with axial contact of the locking cams (20) on the switching ramps (25, 25a, 25b) in the case of locking cams (20, 20b) which are disengaged from the longitudinal grooves (22, 22a, 22b), until the locking cams (20, 20b) come into contact with stops (24, 24b) of the switching ramps (25, 25a, 25b) and the locking cams (20, 20b) engage into longitudinal grooves (22, 22a, 22b) in the case of a rotational directional reverse of the rotary drive (6, 6b) and form one of the axial positively locking connections with the locking pockets (23, 23a, 23b) which are arranged in the longitudinal grooves (22, 22a, 22b) at a predefined axial height.

4. Apparatus (1, 1a, 1b) according to Claim 3, **characterized in that** at least two longitudinal grooves (22, 22a, 22b) which are arranged distributed over the circumference are provided with locking pockets (23, 23a, 23b) which are arranged at the same axial height.

5. Apparatus (1, 1a, 1b) according to Claim 3 or 4, **characterized in that** the stops (24, 24b) are offset in the circumferential direction with respect to a centre axis of the longitudinal grooves (22, 22a, 22b), and the longitudinal grooves (22, 22a, 22b) and the locking cams (20, 20b) have insertion bevels (27, 27a, 27b, 28, 28b) which are complementary with respect to one another and bring about a rotation of the locking ring (19, 19b).

6. Apparatus (1, 1a, 1b) according to one of Claims 3 to 5, **characterized in that** the locking device (18, 18b) has a plurality of locking pockets (23, 23a, 23b) distributed over the circumference with switchable positively locking connections which are configured axially in multiple steps.

7. Apparatus (1, 1a, 1b) according to one of Claims 3 to 6, **characterized in that** a guide sleeve (9, 9b) with recessed or notched longitudinal grooves (22, 22a, 22b) is connected to the spindle nut (8, 8b) in a manner which is supported axially by way of longitudinal grooves (22, 22a, 22b) which are delimited at a different axial height from the locking pockets (23, 23a, 23b).

8. Apparatus (1, 1a, 1b) according to one of Claims 3 to 7, that an axial positively locking connection is provided on locking pockets (23a) without longitudinal grooves.

9. Apparatus (1, 1a, 1b) according to one of Claims 1 to 8, **characterized in that** the rotary drive (6, 6b) is arranged fixedly on a component (2, 2b) by means of a housing (30b) in a manner which is axially parallel to the components (2, 2a, 3, 3b), and rotationally drives the thread part (A) by means of a belt or gearwheel drive.

10. Apparatus (1b) according to one of Claims 1 to 9, **characterized in that** the spindle nut (8b) is rotationally driven.

11. Apparatus (1b) according to one of Claims 8 to 10, **characterized in that** the guide sleeve (9, 9b) and the switching ramps (25, 25a, 25b) are mounted such that they are fixed axially and can be rotated with respect to the spindle nut (8b).

12. Apparatus (1, 1a) according to one of Claims 1 to 9, **characterized in that** the spindle (7) is rotationally driven.

13. Apparatus (1, 1a, 1b) according to one of Claims 1 to 12, **characterized in that** the transmission thread (4, 4b) is configured as a trapezoidal thread drive, a ball screw drive (16) or as a planetary roller drive.

14. Apparatus (1, 1a, 1b) according to one of Claims 1 to 13, **characterized in that** the two components (2, 2a, 3, 3b) are provided in a spring strut.

15. Apparatus (1, 1a, 1b) according to one of Claims 1 to 14, **characterized in that** the apparatus can be controlled by a central control unit in order to configure a level regulation means.

16. Apparatus according to at least one of Claims 1 to 15, the locking device (18, 18b) of which has a locking ring (19, 19b) which is mounted rotatably and axially non-displaceably on the spindle (7, 7b), forces which act between the two components (2, 2b, 3, 3b) being transmitted via the spindle (7, 7b) and via the locking ring (19, 19b) in at least one of the adjusting positions (I, II).

## Revendications

1. Dispositif (1, 1a, 1b) pour le réglage en hauteur d'une carrosserie de véhicule, contenant un filetage de déplacement (4, 4b) disposé entre la carrosserie du véhicule et un support de roue, qui déplace deux composants (2, 2b, 3, 3b) déplaçables l'un par rapport à l'autre entre une position de réglage supérieure et une position de réglage inférieure (I, II), le filetage de déplacement (4, 4b) étant pourvu de deux parties de filetage (A, B) pouvant tourner l'une par rapport à l'autre, formées d'une broche (7, 7b) et d'un écrou de broche (8, 8b) et en prise fonctionnelle l'une avec l'autre, l'une des parties de filetage (A) étant reçue de manière fixée axialement et entraînée en rotation par un entraînement en rotation (6, 6b) sur un composant (2, 2b) et l'autre partie de filetage (B) étant solidaire en rotation et pouvant être déplacée axialement sur l'autre composant (3, 3b), **caractérisé en ce qu'**un dispositif de verrouillage (18, 18b) commutable, surmontant l'engagement fonctionnel entre les parties de filetage (A, B) du filetage de déplacement (4, 4b) est prévu.

2. Dispositif selon la revendication 1, **caractérisé en ce que** le dispositif de verrouillage (18, 18b) présente au moins deux engagements par correspondance de formes pouvant être commutés, espacés axialement, surmontant mécaniquement le filetage de déplacement (4, 4b) entre les composants (2, 2b, 3, 3b).

3. Dispositif (1, 1a, 1b) selon la revendication 2, **caractérisé en ce que** le dispositif de verrouillage (18, 18b) présente des rainures longitudinales (22, 22a, 22b) supportées axialement sur l'écrou de broche (8, 8b), en alternance sur la périphérie, avec des cavités de verrouillage (23, 23a, 23b) disposées à une hauteur axiale différente, des cames de verrouillage (20, 20b) d'une bague de verrouillage (19, 19b) pouvant tourner sur la périphérie et reçues de manière fixée axialement sur la broche (7, 7b) étant reçues de manière déplaçable dans les rainures longitudinales (22, 22a, 22b) et ayant, à distance axiale des rainures longitudinales (22, 22a, 22b), de rampes de commutation montantes (25, 25a, 25b) supportées axialement par rapport à l'écrou de broche (8, 8b) et réparties sur la périphérie au nombre des rainures longitudinales (22, 22a, 22b), la bague de verrouillage (19, 19b), lorsque les cames de verrouillage (20, 20b) sont ressorties des rainures longitudinales (22, 22a, 22b), étant tournée au moyen d'une opération de commutation des cames de verrouillage (20, 20b) sur les rampes de commutation (25, 25a, 25b) lors de l'appui axial des cames de verrouillage (20) contre les rampes de commutation (25, 25a, 25b) jusqu'à ce que les cames de verrouillage (20, 20b) viennent buter contre des butées (24, 24b) des rampes de commutation (25, 25a, 25b) et que les cames de verrouillage (20, 20b) s'engagent dans les rainures longitudinales (22, 22a, 22b) lors d'une inversion du sens de rotation de l'entraînement en rotation (6, 6b) et forment avec les cavités de verrouillage (23, 23a, 23b) disposées à une hauteur axiale prédéfinie dans les rainures longitudinales (22, 22a, 22b) l'un des engagements axiaux par correspondance de formes.

4. Dispositif (1, 1a, 1b) selon la revendication 3, **caractérisé en ce qu'**au moins deux rainures longitudinales (22, 22a, 22b) réparties sur la périphérie sont pourvues de cavités de verrouillage (23, 23a, 23b) disposées à la même hauteur axiale.

5. Dispositif (1, 1a, 1b) selon la revendication 3 ou 4, **caractérisé en ce que** les butées (24, 24b) sont décalées dans la direction périphérique par rapport à un axe médian des rainures longitudinales (22, 22a, 22b) et les rainures longitudinales (22, 22a, 22b) et les cames de verrouillage (20, 20b) présentent des biseaux d'insertion (27, 27a, 27b, 28, 28b) complémentaires les uns des autres, provoquant une rotation de la bague de verrouillage (19, 19b).

6. Dispositif (1, 1a, 1b) selon l'une quelconque des revendications 3 à 5, **caractérisé en ce que** le dispositif de verrouillage (18, 18b) présente plusieurs cavités de verrouillage (23, 23a, 23b) réparties sur la périphérie, avec des engagements par correspondance de formes commutables réalisés axialement avec plusieurs étages.

7. Dispositif (1, 1a, 1b) selon l'une quelconque des revendications 3 à 6, **caractérisé en ce qu'**à l'écrou de broche (8, 8b) est connectée de manière supportée axialement une douille de guidage (9, 9b) avec des rainures longitudinales (22, 22a, 22b) formées dans celle-ci ou creusées dans celle-ci, les rainures longitudinales (22, 22a, 22b) étant limitées à une hauteur axiale différente par les cavités de verrouillage (23, 23a, 23b).

8. Dispositif (1, 1a, 1b) selon l'une quelconque des revendications 3 à 7, qu'un engagement par correspondance de formes est prévu au niveau de cavités de verrouillage (23a) sans rainures longitudinales.

9. Dispositif (1, 1a, 1b) selon l'une quelconque des revendications 1 à 8, **caractérisé en ce que** l'entraînement en rotation (6, 6b) est disposé avec son axe parallèle aux composants (2, 2a, 3, 3b) au moyen d'un boîtier (30b) sur un composant (2, 2b), et entraîne la partie de boîtier (A) au moyen d'un entraînement à courroie ou à roue dentée.

10. Dispositif (1b) selon l'une quelconque des revendications 1 à 9, **caractérisé en ce que** l'écrou de broche (8b) est entraîné en rotation.

11. Dispositif (1b) selon l'une quelconque des revendications 8 à 10, **caractérisé en ce que** la douille de guidage (9, 9b) et les rampes de commutation (25, 25a, 25b) sont supportées de manière fixée axialement et de manière rotative par rapport à l'écrou de broche (8b).

12. Dispositif (1, 1a) selon l'une quelconque des revendications 1 à 9, **caractérisé en ce que** la broche (7) est entraînée en rotation.

13. Dispositif (1, 1a, 1b) selon l'une quelconque des revendications 1 à 12, **caractérisé en ce que** le filetage de déplacement (4, 4b) est réalisé sous forme de vis d'entraînement trapézoïdale, de vis d'entraînement à bille (16) ou de transmission à roulements planétaires.

14. Dispositif (1, 1a, 1b) selon l'une quelconque des revendications 1 à 13, **caractérisé en ce que** les deux composants (2, 2a, 3, 3b) sont prévus dans une jambe de force à ressort.

15. Dispositif (1, 1a, 1b) selon l'une quelconque des revendications 1 à 14, **caractérisé en ce que** le dispositif peut être commande par une unité de commande centrale pour réaliser une régulation de niveau.

16. Dispositif selon au moins l'une quelconque des revendications 1 à 15, dont le dispositif de verrouillage (18, 18b) présente une bague de verrouillage (19, 19b) qui est supportée sur la broche (7, 7b) de manière rotative et non déplaçable axialement, des forces agissant dans au moins l'une des positions de réglage (I, II) entre les deux composants (2, 2b, 3, 3b) étant transmises par le biais de la broche (7, 7b) et par le biais de la bague de verrouillage (19, 19b).
